# EUROPEAN PATENT APPLICATION

(11) **EP 2 727 993 A1**
(43) Date of publication of application: **07.05.2014**
(21) Application number: 13425144.6
(22) Date of filing: 30.10.2013
(51) Int. Cl.: C12H 1/14, B65D 39/00, A23L 3/3445

(54) **Device for preserving wine in a bottle**

(30) Priority: 01.11.2012 IT MI20121876
(71) Applicant: Baracco, Stefano, 20134 Milano (IT); Baracco, Pietro, 50021 Barberino Val d'Elsa (FI) (IT)
(72) Inventor: Baracco, Stefano, 20134 Milano (IT); Baracco, Pietro, 50021 Barberino Val d'Elsa (FI) (IT)

(57) **Abstract**

Device (100) connectable to a bottle (200) mouth suitable for closing the same and preserving the wine (150) therein contained, comprising:
- an internal reservoir (101) for containing a predetermined quantity of inert gas under pressure having molecular weight greater than that of air;
- release means (102) suitable to introduce said inert gas from said reservoir (101) inside said bottle (200) to avoid degradation of said wine (150);
- air escape means (103) suitable to expel the air inside the bottle (200) during the inert gas introduction in the bottle (200);
- connection means (104) to said bottle (200) mouth suitable to avoid a detachment of said device (100) from said bottle (200) and to guarantee an isolation of the bottle (200) from the external ambient;
- charge means (108) configured to allow the filling of said reservoir (101) with said inert gas.

## Description

### TECHNICAL FIELD

The present invention relates to the field of devices for the preservation of bottled beverages and in particular to the sector of special corks for the preservation of wine in a bottle.

### BACKGROUND ART

Systems for wine preservation are known from the prior art.

One sector relates to systems that suction the air from the bottle, realizing the vacuum in it.

One of the most known devices is a cork for bottle comprising a suction valve and a device connectable to said cork for suctioning the air in the bottle. This system is known with the trade name Vacu Vin®. Systems for preserving wine in bottle through insertion of inert gas in the bottle itself are as well known. In particular is known the use of spray cans containing inert gas that through a nozzle allow to spray the inert gas in the bottle when the latter is uncorked.

Spray systems are very chip, but do not allow to understand how much gas is to be put in the bottle to preserve the wine.

Furthermore, wine bottles preserved with this system must be recorked to be stored.

In the prior art are also know more complex devices able to preserve and to supply the beverage in bottle. The more complex devices insert a predetermined amount of inert gas in the bottle to dispense wine and with the inert gas introduced in the bottle preserve the beverage.

This kind of devices are cumbersome, expensive and seldom usable in household usage.

A further wine preservation system is known from the patent US6595109 wherein is described a cork provided with connection means to an external source of supply of the inert gas.

Through this cork, inert gas in the external source is vehiculated in the bottle, while a system of channels allow to the air in the bottle to leak out.

A further example of a system for preserving wine in bottle is described in the patent application WO2008/148816, wherein a bottle cork is provided with an inlet channel through the which a inert gas suctioned from an external device can be dispensed, and an outlet channel for the expulsion of the air present in the bottle.

These two systems have a similar functioning and the same drawbacks. In particular, the two systems need of an external source of inert gas: in the patent US6595109 this source of inert gas may be a disposable cartridge, while in the patent application WO2008/148816 this source of inert gas is a dispensing device provided with an inner chamber containing a disposable cartridge of gas.

Furthermore, these two systems are rather expensive and complex to realize.

Further example of a device depending from an external source of gas is the one described in the document DE102009046727. As in the preceding two cases, this device also needs a source of inert gas independent from the device, the only difference from the other two systems is the positioning of the cartridge inside the device itself.

Two further examples are furnished in the documents WO2005002980 and WO2009044133, wherein two systems comprising two devices are described, the first for the connection with the bottle and the second for dispensing the gas. Both solutions provide complex system with many components, and not an integrated solution, simpler to be used. Moreover, as the previous cases, these systems depend from an external source of inert gas, in particular a disposable cartridge.

Therefore there is a need for a solution to the above mentioned problems.

### SUMMARY

Object of the present invention is to overcome drawbacks of prior art and in particular to provide a device provided with an inner reservoir of inert gas that does not need external inert gas dispensing devices to preserve wine in a bottle.

Another object of the present invention is to provide a device for preserving wine in a bottle usable everywhere, such device without depending from charging devices or from the supplying of inert gas. Another object of the present invention is to provide a device with a inner reservoir without the need of inert gas disposable cartridges.

In particular, another object of the present invention is to provide a device adapted to the preservation of a single bottle of wine.

It is a further object of the present invention to provide a disposable device for preserving a bottle of wine. Furthermore, it is an object of the present invention to provide a device easily realizable with low production costs.

It is also an object of the present invention to provide a device that allows the preservation of wine in a bottle independently from the position assumed by the bottle (in vertical or horizontal position) once stored.

These and others objects of the present invention are reached realizing a device connectable to a bottle mouth suitable for closing the same and preserving the wine therein contained, comprising:
- an internal reservoir for containing a predetermined quantity of inert gas under pressure having molecular weight greater than that of air;
- release means suitable to introduce said inert gas from said reservoir inside said bottle to avoid degradation of said wine;
- air escape means suitable to expel the air inside the bottle during the inert gas introduction in the bottle;
- connection means to said bottle mouth suitable to avoid a detachment of said device from said bottle and to guarantee an isolation of the bottle from the external ambient;
- charge means configured to allow the filling of said reservoir with said inert gas.

Advantageously, said device allows complete release of the inert gas of the reservoir inside the bottle, so that inert gas released, being heavier of the air in the bottle, lays over the wine surface insulating it from the air and allowing his preservation.

Even more advantageously, said reservoir is charged with inert gas under pressure by said charge means.

The reservoir, being internal to the device, must be charged with inert gas to allow the usage of the device itself.

Charge means allow the reservoir to be charged of inert gas.

With reference to the term wine, is intended all types of still wine or sparkiing wine, and more in general all alcoholic beverages obtained by fermentation.

The device according the present invention is also suitable for the preservation of beverages different from wine, but equally intended for food consumption, in particular when those beverages may degrade for oxidation if in contact with the air, like for example olive oil, vinegar or fruit juices.

Further features of the device according the present invention are scope of dependent claims.

In particular said reservoir is at least in part integrated in the device.

Advantageously a reservoir is at least in part integrated in the device, allows to obtain a more compact device, and cheaper to realize.

Said air escape means may comprise an air valve configured to allow an air discharge from said bottle during the inert gas introduction and to avoid wine leaks when said bottle is turned over.

Said air valve prevent air introduction from outside in the bottle.

Advantageously, said air valve allows to store the bottle and the device connected to it in any position, preventing wine leaks from the bottle and accidental entrance of air.

Preferably, the opening pressure of said air valve is comprised between 0,05 and 0,8 bar and even more preferably comprised between 0,1 and 0,7 bar.

Advantageously, these pressure values allow the opening of the air valve during inert gas introduction in the bottle for the pressure increase in the same, and avoid wine leaks from bottle when the latter is upside down or is laying on a side.

Said device may comprise a lower prominence extending toward the bottom of said bottle suitable to release said inert gas in a position closed to the wine therein contained.

Advantageously, said prominence allows inert gas dispensing in a closer position with respect to the wine and thus a better distribution of the inert gas on the wine.

Furthermore, said prominence allows to space the point where inert gas outflow from the inlet point of the air in said escape means, minimizing the risk that inert gas introduced in the bottle leaks from the escape means.

In particular said prominence comprises an end having a flared shape to introduce said inert gas in a distributed manner over the surface of said wine.

Advantageously, said prominence having a flared shape, enlarging progressively, allows to reduce inert gas speed leaving the device and improve inert gas distribution on the wine surface In particular, said prominence, when the device is connected to the bottle, has a length from the rim of the mouth to the bottom of said bottle comprised between 2,5 and 11 cm, preferably from 5 and 8 cm.

The device is realized to preserve an open bottle and preferably partially consumed of the wine in it, said lengths allow the lower prominence to be not in direct contact with the wine, but to get closer to it.

In particular said predetermined quantity of inert gas contained in said reservoir may have a pressure comprise between 1 and 8 bar, preferably 1,5 and 6 bar.

Advantageously, said device is filled by charge means with a predetermined quantity of inert gas.

Said pressure of said predetermined quantity of inert gas allows the introduction in the bottle of a volume of inert gas suitable to isolate the wine from the air still present in the bottle, if any.

The quantity of inert gas introduced in the bottle, having molecular weight greater than the one of the air, quickly stratify under the air in the bottle, forming a pall of inert gas between the wine and the air, insulating in this way the wine.

The quantity of inert gas introduced in the bottle is sufficient to cover the surface of the wine for any position assumed by the bottle and for any quantity of wine left in the bottle.

For example, in case of a classic bottle of glass containing wine, the surface of wine to insulate is maximum when the bottle is half empty and stands in horizontal position.

The inert gas introduced, being positioned between the wine and the air in the bottle, allows wine preservation.

In particular, said device may be disposable-type.

Advantageously, when the predetermined quantity of inert gas in the reservoir is released by the release means in the bottle, the device is not reusable because the reservoir is, at that point, without inert gas.

In this way the device is disposable and cannot be used with types of gas not suitable for wine preservation, for example non-food gases.

In particular, said release means may assume a closed position, wherein the reservoir charged with inert gas in pressure is insulated from the bottle, and an opened position, wherein the inert gas in the reservoir is introduced in the bottle.

Said release means may comprise a mobile slider within said device movable within said device between a first position in which said reservoir is closed and a second release position in which said inert gas in said reservoir is introduced inside the bottle.

Advantageously said slider element, for example a piston, moving from said first to said second position, allows to open said release means, putting in fluid communication said reservoir and said bottle.

In particular said slider element may comprise a first sealing gasket to allow the airtightness of the device when said slider element is in said first position.

The slider element is operable by a button suitable to facilitate the piston movement between said first and second position.

The button may be connected in integral way with the slider element and closing a side of the reservoir, so as that the pressure in the same, pushes the button and the slider element connected to it. In this way the airtightness of the device is guaranteed when the slider element is in said first position.

Said button may comprise a second sealing gasket to avoid gas leaks between the slider element and the body of the device.

Advantageously, the usage of a button to operate the slider element allows a timely opening of the release means and a less effort required for the user to release the gas in the bottle.

Said release means may comprise a membrane suitable for allowing said inert gas introduction from said reservoir to said bottle in case of breaking or piercing of the membrane.

Advantageously, this solution allows to realize the device minimizing the components present in it.

The membrane may break for a sudden increase of the pressure in the device, caused for example by a compression of the device exercised by the user, or for by piercing of the membrane itself.

In particular, said device may comprise a sharp element suitable to pierce said membrane and to allow said inert gas introduction inside the bottle.

Advantageously, a sharp element may allow the piercing of the membrane with a simple gesture of pressure of the device by the user.

In particular said device may be realized entirely in polymeric material, partly soft to give at the device the sufficient flexibility needed for the opening of the release means and to allow an optimal coupling of the connection means to the bottle, and partly hard to bear the pressure of the inert gas in the reservoir. Thermoplastic elastomers, ABS, polyethylene, polypropylene or silicone materials are preferable. Advantageously, the use of polymeric material allows to realize the device by molding, considerably reducing realization costs.

In particular, said inert gas having molecular weight greater than that of air is argon, or carbon dioxide, or their mixture.

Advantageously said inert gases, having molecular weight greater than that of air, tend to positionate under the air and over the wine, avoiding that the oxygen in the air oxides the wine.

### BRIEF DESCRIPTION OF THE DRAWINGS

The technical features and the advantages of a device connectable to the bottle mouth to close it and to preserve the wine contained according to the present invention, will be clearer in the following description, illustrative and nonlimiting, with reference to the schematic drawings attached, wherein:
- figure 1 shows a schematic prospectic view of a first embodiment of a device for preserving the wine in a bottle according to the present invention connected to the mouth of a bottle, such bottle in vertical position;
- figure 2 shows a schematic prospective view of a first embodiment of a device for preserving the wine in a bottle according to the present invention;
- figure 3 shows a schematic prospectic view of a device for preserving the wine in a bottle according to the present invention connected to the mouth of a bottle, such bottle in horizontal position;
- figure 4a shows a schematic view in section of the device of figure 2, when the release means are closed;
- figure 4b shows a schematic view in section of the device of figure 2, when the release means are open;
- figure 4c shows a detail of the section of the device of figure 2 with a particular embodiment of the escape means.
- figure 5 shows a schematic prospective view of a second embodiment of a device for preserving the wine in a bottle according to the present invention;
- figure 6 shows a schematic view in section of the device of figure 5;
- figure 7 shows a a schematic view in section of a third embodiment of a device for preserving the wine in a bottle according to the present invention.

### DETAILED DESCRIPTION

The following description of exemplary embodiments refer to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

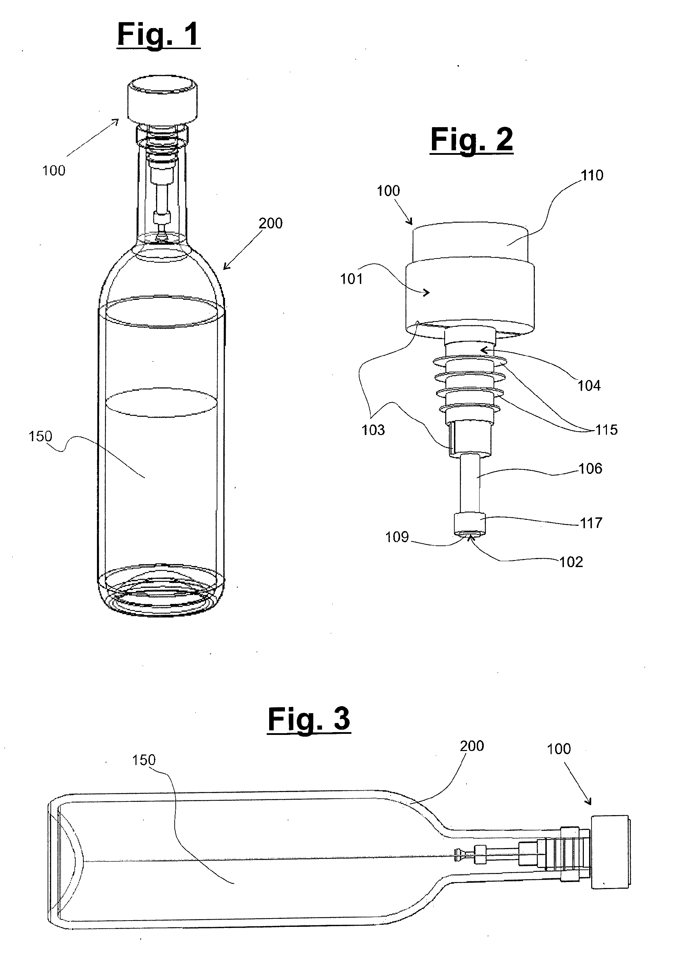

In figures 1 and 3 is shown a device 100 for bottled wine preservation connected to a bottle 200 containing wine 150.

In particular, in figure 1 is shown the device 100 after the release of the inert gas in the bottle for preserving wine 150, and in figure 3 is shown the device 100 connected to a bottle 200 laying on a side. In particular, with reference to the figures from 1 to 7, is shown a device 100 connectable to the mouth of a bottle 200 adapted to close the same and to preserve the wine 150 contained, comprising:
- an internal reservoir 101 for containing a predetermined quantity of inert gas under pressure having molecular weight greater than that of air;
- release means 102 adapted to introduce said inert gas from said reservoir 101 inside said bottle 200 to avoid degradation of said wine;
- air escape means 103 adapted to expel the air inside the bottle 200 during the inert gas introduction in the bottle;
- connection means 104 to said bottle mouth adapted to avoid a detachment of said device from said bottle 200 and to guarantee an isolation of the bottle from the external ambient;

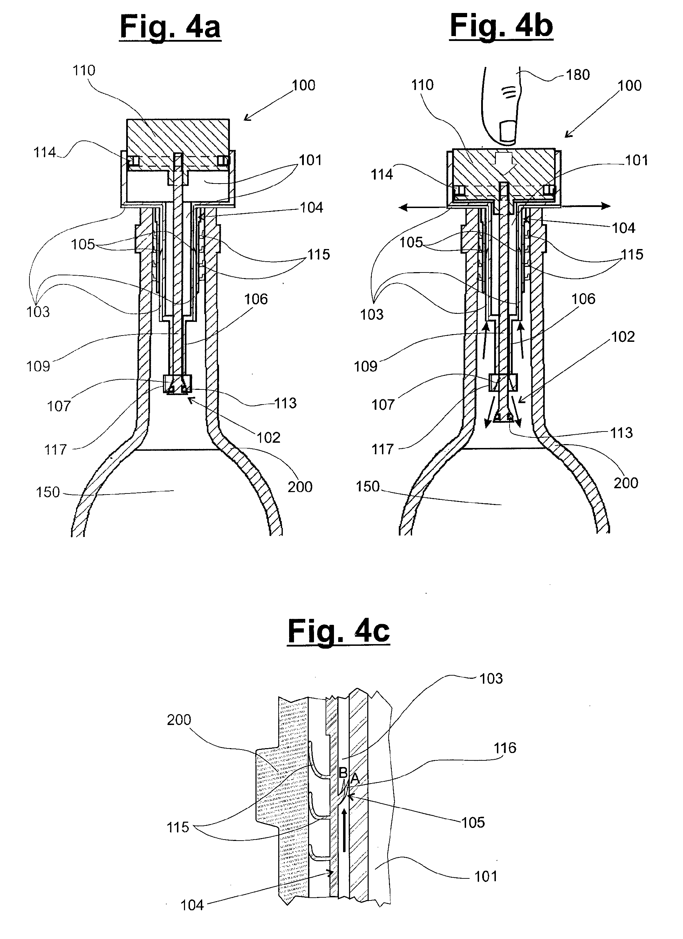

With reference to figures 2, 4a, 4b and 4c, is shown a first embodiment of the device 100 according to the present invention.

In said embodiment said release means 102 comprise a slider, in the form of a piston 109, movable within the device 100 between a first position in which said reservoir 101 is closed and a second release position in which said inert gas in said reservoir 101 is introduced inside the bottle.

In particular said piston 109 is activated by a button 110 to make easier the passage between the first and the second position.

The body of the device 100 comprises a inner cavity open on the top and on the bottom, visible in figures 4a and 4b, where slide a piston 109 and a button 110 bounded to said piston 109.

Said cavity is closed at top by said button 110 so as to realize the reservoir 101.

Said piston 109 when in said first position closes at the bottom said cavity.

In particular, the piston 109 comprises a first sealing gasket 113, for example an o-ring, adapted to seal the inner room of the reservoir 101 when said piston 109 is in said first closed position.

The pressure in the reservoir 101 pushes toward the top the button 110, ensuring a sufficient compression of the first sealing gasket 113 between the piston 109 and the body of the device 100, avoing inert gas leaks.

Said button 110 further comprises a second sealing gasket 114, for example a pneumatic gasket of the company Parker®, adapted to avoid inert gas leaks from reservoir 101, even when said button 110 moves with the piston 109 from said first position to said second position.

A user 180 that pushes the button 110 may open said release means 102, and in particular impressing a force causing the movement of the piston 109 from said first position to said second position and releasing the inert gas in the bottle, as shown in figure 4b.

Said device 100 may comprise connecting means 104 adapted to be fit on the device 100 and having a plurality of circular slats 115 in flexible polymeric material. Said slats 115 have increasing outer diameter to best fit to different diameters of the bottle mouth 200.

Inserting the device 100 in the bottle mouth 200, said slats 115 flex adhering to the inner portion of the mouth. These adhesion ensures an optimal isolation and avoid the detachment of the device 100 from the bottle 200, in particular during inert gas release.

Said device 100 further comprises air escape means 103 to allow the spillage of the air from the bottle 200 when the inert gas in the reservoir 101 is released in the bottle 200. The quantity of air that spills from the bottle 200 is substantially the same as the quantity of inert gas introduced, so as to limit or to avoid pressure increase in the bottle 200.

The air escape means 103 further ensure that the bottle 200 won't be in pressure.

Said air escape means 103 may comprise a channel obtained on the body of the device 100 or alternatively a channel (not shown) inside the connection means 104.

Said air escape means 103 may comprise an air valve 105 configured to allow an air discharge from the bottle 200 during the inert gas introduction and to avoid wine leaks when said bottle 200 is turned over, with respect to the vertical position.

In particular, said valve 105 may preferably be a non-return valve, a duckbill valve, an umbrella valve, a dome valve or an elastic flap 116 adapted to move from an abutement position to an opened position when the elastic flap 116 is stressed from a predetermined pressure from inside the bottle 200.

As shown in figure 4c, said elastic flap 116 may be a flexible protuberance of the connection means 104 that, when in abutment with the device 100 (position A), ensures the closure of the air escape means 103, while when flexes (position B) allows the air escape to the outside.

To make the elastic flap 116 sufficiently flexible to flex in case of pressure increase, this may be realized with a elastomeric material with a predetermined rigidity.

In particular, the opening pressure of the valve 105 is comprised between 0,05 and 0,8 bar, preferably between 0,1 e 0,7 bar, so as that, when the inner of the bottle 200 reaches and exceeds said values of pressure, the elastic flap 116 flexes (position B) allowing air spilling from the bottle 200.

This valve may be a dome valve or a duckbill valve (not shown) comprising a plurality of flaps that, in rest, close the air escape means 103, while when pushed from the inner pressure in the bottle 200, move allowing air passage.

Said valve 105 may comprise an hole of little dimensions (not shown), preferably with a diameter lower than one millimetre, to allow complete vent of the pressure in the bottle 200, and avoid wine outflow to the outside for capillarity.

Said device 100 further comprises a lower prominence 106 extending toward the bottom of the bottle 200 adapted to release inert gas in a closer position with respect to the wine 150.

Said prominence 106 approaches inert gas outlet in the bottle 200 to the wine 150, favouring the positioning of inert gas on the wine 150.

The molecular weight of the inert gas introduced in the bottle 200 is greater than the one of the air, inert gas tends to lie on the wine, isolating it from the air.

In particular, said prominence may be an elongated appendix of the body of the device 100 that extends inferiorly.

Furthermore, said prominence 106 may space the inlet point of the inert gas from the outlet point of the air from the bottle 200, avoiding the undesirable drawback of inert gas outflow to the outside.

Said prominence 106 has an end 107 with flared shape, as shown in figures 4a and 4b, for a distributed introduction on the surface of the wine 150.

In particular, the inner channel of the prominence 106, adapted to lower the introduction point of the inert gas in the bottle 200, has an end 107 divergent toward the outside, as an inverted funnel.

This flared end 107 allows a more uniform distribution of the gas on the surface of the wine 150, further reducing turbulence phenomenon that tends to mix air and inert gas thus slowing the stratification process.

In particular, said lower prominence 106 may present a length, measured from the rim of the mouth toward the bottom of the bottle 200, between 2,5 and 11 cm, preferably 5 and 8 cm.

A prominence 106 of this length approaches the outlet of the inert gas to the surface of the wine 150. Preferably, the device 100 is operated when the bottle 200 is in vertical position to facilitate the process of drop under gravity of the inert gas on the wine 150.

In particular, the device 100 is adapted to the preservation of an open bottle 200 of wine and preferably partly consumed of the wine 150 contained, the prominence 106 may thus extend in the bottle up to 11 cm.

A bottle 200 of wine 150 is normally filled up to 7 cm from the overflowed, is thus preferable that the wine 150 be partly consumed to avoid a contact between the device 100 and the wine 150 when the device 100 is operated.

Said device 100 comprises charge means 108 through which reservoir 101 is filled with a predetermined quantity of inert gas.

The device 100, to be used to preserve the wine 150, has to be charged of pressurized inert gas.

In particular, said charge means 108 may be a non-return valve (not shown) connected to the reservoir 101, or a passage channel between the reservoir 101 and the outside that after the charge is closed or welded.

Alternatively, said charge means 108 may be a valve in elastomeric material for injection of pressurized gas, as the ones of the soccer balls. This valve may be in fluid communication with the inside of the reservoir 101 and opens when stressed by a strong pressure of a filling needle (not shown) that penetrates it.

In the embodiment of figures 2 and 4, the filling of the reservoir 101 with said predetermined quantity of inert gas occurs through the lower opening of the device 100.

A charge device (not shown) may be connected to the lower portion of the device 100, preferably at the lower end of the prominence 106, and more preferably to a connection surface 117 on the outer portion of the device 100.

Said charge device may connect hermetically to said connection surface 117 and, when the piston 109 is not in the first position, introduce a pressurized inert gas to charge the reservoir 101.

In this embodiment, said connection means 117, the piston 109 and the lower opening of the device 100 constitute charge means 108.

Said reservoir 101 is charged with a predetermined quantity of inert gas with a pressure between 1 and 8 bar, preferably between 1,5 and 6 bar and more preferably between 3 and 5 bar.

Pressure values indicated, thus working values of the device 100, are referred to normal temperature ranges for preservation and tasting of the wine, preferably in the temperature range of 1-35 °C, and more preferably in the temperature range of 4-24 °C.

The inner pressure of the reservoir 101, once said release means 102 are open, allows to introduce in the bottle 200 a quantity of gas sufficient to realize a layer of inert gas useful for covering the surface of the wine 150, that otherwise would be in contact with the air in the bottle 200.

In particular, said predetermined quantity of gas allows to realize a layer of gas for covering the surface of the wine 150 independently from the position of the bottle 200. For example, using a device 100, as shown in figure 2 and 4, with a reservoir 101 having a volume of 1,9 cl filled of argon at 3,8 bar, said argon once released in a bordolese bottle of 75 cl, will form a layer of 1,5 cm on the wine 150 when the bottle is half consumed and is in vertical position.

The predetermined quantity of argon used to fill the reservoir 101 of the device 100 may be between 0,075 grams and 0,15 grams.

In this embodiment, said device 100 may be realized in any polymeric or metallic material, and in particular said connection means 104 may be realized preferably in polymeric flexible material to improve the adhesion with the mouth of the bottle 200.

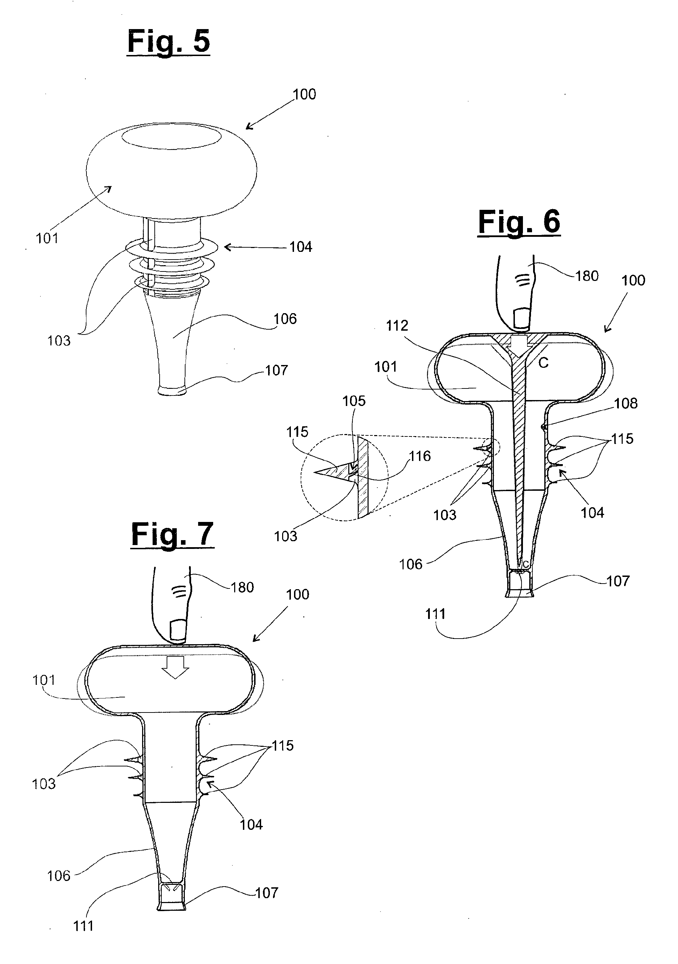

In figure 5 and 6 is shown a second embodiment of the device 100 according the present invention. The device 100 in this second embodiment may be entirely realized in polymeric material.

In particular, an upper portion of the device 100 realized at least partially in flexible material and comprising at its inside a reservoir 101.

An intermediate portion of the device 100, comprising a plurality of circular slats 115 in flexible material, constitutes the connection means 104.

An elongated lower portion constitutes the prominence 106 from which the inert gas is released in the bottle 200.

In particular, said prominence 106 has a flared end 107 to facilitate the distribution of the inert gas on the wine 150 in the bottle 200.

In this embodiment, said release means 102 comprise a membrane 111 that, in case of break or pierce, allows inert gas release in the reservoir 101 inside the bottle 200.

In particular, said membrane 111 is thin thus easy to break or to pierce.

To facilitate the pierce of the membrane 111, said device 100 comprises a sharp element 112 stiff or semi-stiff.

In particular, said sharp element 112 has a sharped lower end to pierce the membrane 111 when these two elements enter in contact.

Said sharp element 112 is integral to the upper portion of the device 100, as shown in figure 6, so as that, compressing from the top to the bottom the upper portion of the device 100, said sharp element 112 comes down tearing the membrane 111 and allowing inert gas release in the bottle 200, as shown in figure 6 with the position indicated by the letter "C".

Instead, when the reservoir 101 is charged with inert gas, said sharp element 112 is kept spaced from said membrane 111 for the tension of the walls of the pressurized reservoir 101.

Positioning the device 100 on the mouth bottle 200 and compressing the device 100 downward, said sharp element 112 pierces the membrane 111 releasing inert gas in the bottle 200.

Said circular slats 115 may comprise a through channel that constitutes said air escape means 103. Furthermore, said air escape means 103 may comprise an elastic flap 116 movable between a closed position and an open position of the channel, that constitutes a valve 105.

A variation of the pressure inside the bottle 200, may determine a raising of the elastic flap 116 and consequently the opening of air escape means 103 to expel at the outside the air in the upper part of the bottle.

Said device 100 may further have charge means 108, adapted to allow the charge of the device 100.

In particular a nozzle needle-like (not shown) may penetrate in an elastic valve, that constitutes charge means 108, to inject pressurized inert gas in the device 100.

Said elastic valve may have flaps that wrap and adhere to the nozzle during insertion, so as to avoid gas leaks during charge phase. The same flaps close for the pressure in the reservoir 101, when said nozzle is removed from device 100, keeping sealed the pressurized reservoir 101.

In figure 7 is shown a third embodiment of the device 100 according to the present invention.

Said third embodiment may differ from the second embodiment for the absence of the sharp element 112. In this embodiment, the membrane 111 may be elastic and thiner, so as to be easier to break. Compressing the device 100, and in particular his upper portion rising from the bottle, is possible to realize an increase of the internal pressure in the reservoir 101 so as to break the membrane 111 and releasing the gas in the bottle 200.

Preferably, an increase of the internal pressure in the reservoir 101 of the 20% may determine the break of the membrane 111. In this way, accidental bumps to the device 100 or a sudden temperature increase do not cause the break of the membrane 111.

The reservoir 101 may be filled during molding of the device 100 through a charge hole (not shown) that once the filling phase of the reservoir 101 ends, is welded so as to close said charge hole and to preserve the pressurized reservoir 101.

The device 100 according these second and third embodiments may be realized through a molding or comolding of polymeric materials.

Preferably, inert gas in the reservoir 101 is an inert gas with molecular weight higher than the molecular weight of the air.

The use of the argon is preferable, or in alternative carbon dioxide. May also be used mixture of argon with other gases or mixture of carbon dioxide with other gases.

The device 100 is structured to be used once. In particular said device is disposable.

The device 100 contains a predetermined quantity of inert gas sufficient to preserve one bottle 200 of wine 150.

Once released, the inert gas of the reservoir 101 is inside the bottle 200, said device 100 is discharged and thus not reusable.

Said device 100 is thus conceived for the user desiring serving one or more glasses of wine 150, and after the serving, does not want that the wine 150 left in the bottle 200 deteriorating.

Said device 100 allows in an easy and cheap way, to preserve the wine 150 left in the bottle 200, independently from the quantity of wine 150 left in the bottle 200 and from the positioning of the bottle 200.

With a simple compression of the device 100, and thus with the release of the inert gas in the bottle 200, the user may preserve the wine 150 not consumed for days or weeks.

To optimize the preservation of the wine 150, the device 100 has to be not removed from the bottle 200 until next serving of the wine 150.

When the user wishes to taste again the wine 150 left in the bottle 200, is sufficient to remove the device 100 from the bottle 200 and serving the wine 150 left.

It is clear that the device so conceived can be susceptible of various modifications and variations, all covered by the scope of the invention; furthermore all the details are replaceable by elements technically equivalent. In practice, the materials used and the dimensions may be any according to the technical requirements.

## Claims

1. Device (100) connectable to a bottle (200) mouth suitable for closing the same and preserving the wine (150) therein contained, comprising:
- an internal reservoir (101) for containing a predetermined quantity of inert gas under pressure having molecular weight greater than that of air;
- release means (102) suitable to introduce said inert gas from said reservoir (101) inside said bottle (200) to avoid degradation of said wine (150);
- air escape means (103) suitable to expel the air inside the bottle (200) during the inert gas introduction in the bottle (200);
- connection means (104) to said bottle (200) mouth suitable to avoid a detachment of said device (100) from said bottle (200) and to guarantee an isolation of the bottle (200) from the external ambient; **characterized by the fact of** comprising charge means (108) configured to allow the filling of said reservoir (101) with said inert gas.

2. Device (100) according to claim 1, wherein said reservoir (101) is at least in part integrated in the device (100).

3. Device (100) according to claim 1 or 2, wherein said air escape means (103) comprise an air valve (105) configured to allow an air discharge from said bottle (200) during the inert gas introduction and to avoid wine leaks when said bottle (200) is turned over.

4. Device (100) according to claim 3, wherein the opening pressure of said air valve (105) is comprised between 0,05 and 0,8 bar.

5. Device (100) according to any of the previous claims, comprising a lower prominence (106) extended toward the bottom of said bottle (200) suitable to release said inert gas in a position closed to the wine (150) therein contained.

6. Device (100) according to claim 5, wherein said prominence (106) comprises an end (107) having a flared shape to introduce said inert gas in a distributed manner over the surface of said wine (150).

7. Device (100) according to claim 5 or 6, wherein said prominence (106) has an length from the rim of said mouth to the bottom of said bottle comprised between 2,5 and 11 cm, when the device (100) is connected to said bottle (200).

8. Device (100) according to any of the previous claims, wherein said predetermined quantity of inert gas contained in said reservoir (101) has a pressure comprise between 1 and 8 bar.

9. Device (100) according to any of the previous claims, wherein said device (100) is disposable-type.

10. Device (100) according to any of the previous claims, wherein said release means (102) comprise a piston (109) movable within said device (100) between a first position in which said reservoir (101) is closed and a second release position in which said inert gas in said reservoir (101) is introduced inside the bottle (200).

11. Device (100) according to claim 10, wherein said slider element (109) is operated by a button (110) suitable to facilitate the piston movement between said first and second position.

12. Device (100) according to any of claims 1 to 9, wherein said release means (102) comprise a membrane (111) suitable to allow said inert gas introduction from said reservoir (101) to said bottle (200) in case of breaking or piercing of the membrane (111).

13. Device (100) according to claim 12, comprising a sharp element (112) suitable to pierce said membrane (111) and to allow said inert gas introduction inside the bottle (200).

14. Device (100) according to any of the previous claims, wherein said device (100) is made of polymeric material.

15. Device (100) according to any of the previous claims, wherein said inert gas having molecular weight greater than that of air is argon, or carbon dioxide, or their mixture.
